# EUROPEAN PATENT SPECIFICATION

(11) **EP 4 191 971 B1**
(45) Date of publication and mention of the grant of the patent: **13.11.2024**
(21) Application number: 21211683.4
(22) Date of filing: 01.12.2021
(51) Int. Cl.: H04L 61/5038, H04L 61/5007

(54) **METHOD AND SYSTEM FOR INITIAL SETUP OF ENERGY STORAGE SYSTEM**
VERFAHREN UND SYSTEM ZUM ANFÄNGLICHEN EINRICHTEN EINES ENERGIESPEICHERSYSTEMS
PROCÉDÉ ET SYSTÈME DE CONFIGURATION INITIALE D'UN SYSTÈME DE STOCKAGE D'ÉNERGIE

(43) Date of publication of application: 07.06.2023
(73) Proprietor: Hanwha Solutions Corporation, Jung-gu Seoul 04541 (KR)
(72) Inventor: JUNG, Ji Seok, Seoul 04541 (KR); RO, Eun Cheol, Seoul 04541 (KR); JANG, Seung Hyeok, Seoul 04541 (KR)
(74) Representative: Treeby, Philip David William

(56) References cited:
- US-A1- 2008 126 653
- ANONYMOUS: "SEGGER: IP-over-USB technology enables easy web browser access for USB devices | Business Wire", 2 August 2017 (2017-08-02), Hilden, Germany, XP055919268, Retrieved from the Internet <URL:https://www.businesswire.com/news/home/20170802005086/en/SEGGER-IP-over-USB-technology-enables-easy-web-browser-access-for-USB-devices> [retrieved on 20220509]

## Description

### BACKGROUND

### 1. Field of the Invention

The present invention relates to a method and system for initial setup of an energy storage system.

### 2. Discussion of Related Art

In general, an energy storage system (ESS) is a system for improving energy use efficiency, improving the quality of renewable energy, and stabilizing a power supply system by storing power and using it when needed.

This energy storage system is a system that stabilizes the irregular power of new and renewable energy, and improves energy efficiency and improves the stable operation of the power system by storing power when the demand for power is low and using the stored power during times of high consumption, to minimize the restrictions on power transmission to increase the utilization of new and renewable energy.

Types of energy storage systems include for peak reduction, for emergency power, for solar-connected use, and for frequency adjustment.

An energy storage system may include an energy management system (EMS) for receiving information from peripheral devices and monitoring in real time as a system that manages power, including functions capable of monitoring and regulating energy consumption in the energy storage system, and predicting power use and making necessary adjustments.

Meanwhile, when installing the energy storage system, the installer should perform initial setup of the energy storage system according to each installation environment. To this end, the installer connects a user terminal to the energy management system and performs initial setup.

The conventional methods for initial setup of the energy storage system include a method of performing initial setup by connecting the user terminal and the energy management system by wire through an Ethernet cable, and a method of performing initial setup by wirelessly connecting the user terminal and the energy management system through Wi-Fi and Bluetooth (BT) communication.

As such, in the first method of the conventional methods for initial setup of the energy storage system, it is cumbersome for the installer to manually align the IP address range of the user terminal with the IP address range of the energy management system, and a specific application for performing initial setup should be installed in the user terminal.

In addition, in the second method of the conventional methods for initial setup of the energy storage system, since it is a wireless communication method, the connection may be unstable depending on the distance, there is a problem of weak security, and, like the first method, a specific application for performing initial setup should be installed in the user terminal.

The above information disclosed in this Background section is only for enhancement of understanding of the background of the invention and it may therefore contain information that does not form the prior art that is already known to a person of ordinary skill in the art.

The article "SEGGER: IP-over-USB" XP055919268 is acknowledged. The Patent "US 2008/126653 A1 (KING ANDREW E [US] ET AL) 29 May 2008" is acknowledged.

### SUMMARY OF THE INVENTION

The invention is defined by the independent claims. Dependent claims define preferred embodiments.

The present invention is directed to providing a system and method in which there is no need to install a separate initial setup application in a user terminal at the time of initial setup, as well as the hassle of manually matching the IP address range of the user terminal with the IP address range of an energy management system for initial setup can be eliminated.

In addition, the present invention is directed to providing a system and method capable of performing initial setup using user terminals having various operating systems.

The technical problems to be achieved in the present invention are not limited to the technical problems mentioned above, and other technical problems not mentioned will be clearly understood by those of ordinary skill in the art from the following description.

According to the present invention there is provided a method for initial setup of an energy storage system suitable for an installation environment when installing the energy storage system, the method comprising: connecting an energy management system and a user terminal with a USB cable; activating, by the user terminal, a USB network through USB tethering for initial setup; allocating, by the energy management system, a preset static IP to the USB network; accessing, by the user terminal, a setting server of the energy management system using the static IP; and performing, by the user terminal, initial setup of the energy storage system in the setting server, further comprising setting, by the energy management system, the static IP differently according to an operating system of the user terminal, wherein the allocating the static IP is a step of selectively allocating, by the energy management system, the different static IPs to the different USB networks.

Here, the accessing the setting server is a step of accessing the setting server by inputting the static IP to an address bar of a web browser of the user terminal.

In addition, the method for initial setup of an energy storage system according to an exemplary embodiment of the present invention further include, before performing the initial setup, a step of providing, by the setting server, an interface for performing the initial setup to the user terminal.

In addition, the accessing the setting server is a step of accessing, by the user terminal, the setting server with the static IP suitable for the operating system of the user terminal.

According to a second aspect of the present invention there is provided a system a system for initial setup of an energy storage system, comprising: an energy management system comprising a setting server for performing initial setup suitable for an installation environment when installing the energy storage system, and a Controller for allocating a preset static IP to a USB network for initial setup; and a user terminal connected to the energy management system through a USB cable and for activating the USB network through USB tethering; wherein the user terminal accesses the setting server of the energy management system with the static IP and performs initial setup of the energy storage system in the setting server, wherein the Controller sets the static IP differently according to an operating system of the user terminal, wherein the Controller selectively allocates the different static IPs to different USB networks according to the operating system of the user terminal.

Here, when the static IP is input to an address bar of a web browser of the user terminal, the user terminal accesses the setting server.

In addition, the user terminal accesses the setting server with the static IP suitable for the operating system of the user terminal.

According to the present invention, there is no need to install a separate initial setup application in a user terminal at the time of initial setup, as well as the hassle of manually matching the IP address range of the user terminal with the IP address range of an energy management system for initial setup can be eliminated.

In addition, according to the present invention, it is possible to perform initial setup by using the user terminal having various operating systems.

The effects of the present invention are not limited to those mentioned above, and other effects not mentioned will be clearly understood by those of ordinary skill in the art from the following description.

### BRIEF DESCRIPTION OF THE DRAWINGS

The above and other aspects, features, and advantages of the present invention will become more apparent to those of ordinary skill in the art by describing embodiments thereof in detail with reference to the accompanying drawings, in which:
FIG. 1 is a schematic block diagram of a system for initial setup of an energy storage system according to an exemplary embodiment of the present invention.
FIG. 2 is an operation configuration diagram of a system for initial setup of an energy storage system according to a first embodiment of the present invention.
FIG. 3 is an operation configuration diagram of a system for initial setup of an energy storage system according to a second embodiment of the present invention.
FIG. 4 is a flowchart of a method for initial setup of an energy storage system according to an exemplary embodiment of the present invention.

### DETAILED DESCRIPTION OF EXEMPLE EMBODIMENTS

Hereinafter, in order to fully understand the configuration and effects of the present invention, preferred embodiments of the present invention will be described with reference to the accompanying drawings. However, the present invention is not limited to the embodiments disclosed below, and may be embodied in various forms and various modifications may be made, as long as encompassed within the scope of the invention as defined by the appended claims. Rather, the description of the present invention is provided so that this disclosure will be thorough and complete and will fully convey the concept of the invention to those of ordinary skill in the art. In the accompanying drawings, the size of the elements is enlarged compared to actual ones for the convenience of description, and the ratio of each element may be exaggerated or reduced.

Terms such as 'first' and 'second' may be used to describe various elements, but, the above elements should not be limited by the terms above. The above terms may be used only for the purpose of distinguishing one element from another. For example, without departing from the scope of the present invention, a `first element' may be named a 'second element' and similarly, a 'second element' may also be named a `first element.' In addition, expressions in the singular include plural expressions unless explicitly expressed otherwise in the context. Unless otherwise defined, terms used in the embodiments of the present invention may be interpreted as meanings commonly known to those of ordinary skill in the art.

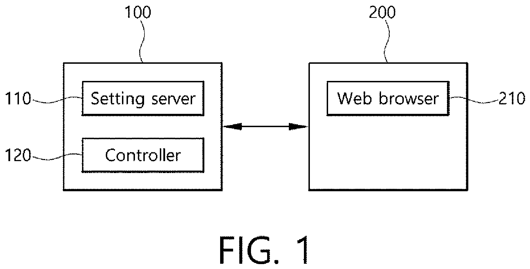

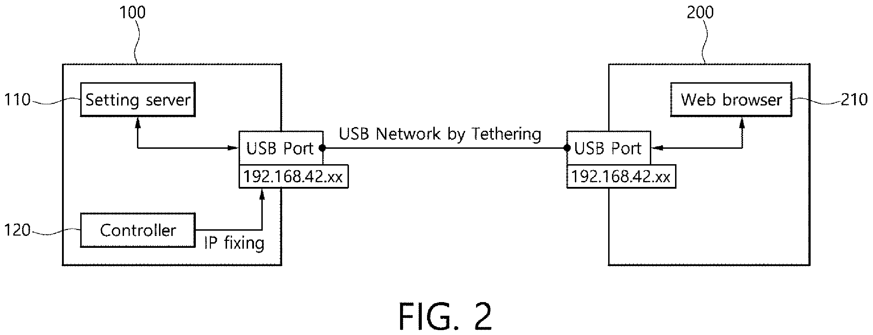

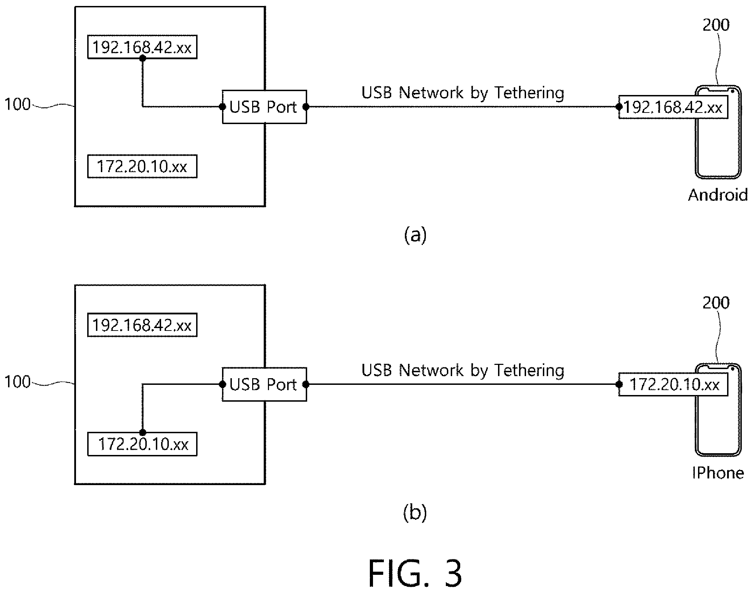

FIG. 1 is a schematic block diagram of a system for initial setup of an energy storage system according to an exemplary embodiment of the present invention, FIG. 2 is an operation configuration diagram of a system for initial setup of an energy storage system according to a first embodiment of the present invention, and FIG. 3 is an operation configuration diagram of a system for initial setup of an energy storage system according to a second embodiment of the present invention.

As shown in FIG. 1, the system for initial setup of an energy storage system according to an exemplary embodiment of the present invention may include an energy management system 100 and a user terminal 200.

An energy storage system (ESS) is a system that increases energy efficiency by storing generated electricity in a storage device (battery, etc.) and supplying it when power is needed.

The energy management system (EMS) 100 is a system that provides data on the operation status and power consumption of the energy storage system to the manager, so that the manager can monitor the energy storage system.

As such, the energy management system 100 may be provided in the energy storage system, but is not limited thereto.

Meanwhile, when installing the energy storage system, the installer should perform initial setup of the energy storage system according to each installation environment. To this end, the installer connects the user terminal 200 to the energy management system 100 and performs initial setup.

The energy management system 100 may include a setting server 110 for performing initial setup suitable for an installation environment when installing the energy storage system, and a Controller 120 for allocating a preset static IP to a USB network. Here, the setting server 110 is a type of web server and provides an interface for performing initial setup.

A web browser 210 for accessing the setting server 110 of the energy management system 100 may be installed in the user terminal 200. Here, the user terminal 200 may be a mobile terminal such as a mobile phone or a notebook computer, but is not limited thereto, and any mobile terminal capable of performing a tethering function is sufficient.

Hereinafter, an operation process of the system for initial setup of an energy storage system according to a first embodiment of the present invention will be described with reference to FIG. 2.

The user terminal 200 is connected to the energy management system 100 through a USB cable. Here, the energy management system 100 and the user terminal 200 have a USB port for connecting a USB cable.

When the user terminal 200 is connected to the energy management system 100, the user terminal 200 may activate the USB network through USB tethering. To this end, tethering software is installed in the user terminal 200 to enable Internet access through a USB cable.

Here, tethering refers to an Internet sharing method that enables an external device to use the Internet by connecting a device capable of using the Internet with another external device.

The user terminal 200 accesses the setting server 110 of the energy management system 100 with a static IP. Specifically, the installer may access the setting server 110 by inputting a static IP known or designated by the user to the address bar of the web browser of the user terminal 200.

As such, in the system for initial setup of an energy storage system according to the first embodiment of the present invention, there is no need to install a separate initial setup application in the user terminal 200 at the time of initial setup, as well as the hassle of manually matching the IP address range of the user terminal 200 with the IP address range of the energy management system 200 for initial setup can be eliminated.

The user terminal 100 may perform initial setup of the energy storage system using an interface for initial setup provided by the setting server 110. That is, the user terminal 200 displays an interface for initial setup provided by the setting server 110 on the display screen of the user terminal 200 so that the installer can perform initial setup.

As such, in the system for initial setup of an energy storage system according to the first embodiment of the present invention, the user terminal 200 directly performs the initial setup by accessing the setting server 110, rather than as in the conventional method transmitting the initial setup data to the setting server 110 and the setting server 110 performing the initial setup based on the initial setup data.

Hereinafter, an operation process of the system for initial setup of an energy storage system according to a second embodiment of the present invention will be described with reference to FIG. 3.

The system for initial setup of an energy storage system according to the second embodiment of the present invention differs only in the configuration for setting and allocating the static IP, and the rest of the configuration is the same.

The user terminal 200 may use a different operating system (e.g., Android, iOS, etc.) for each type. Also, in the case of USB tethering, the IP address range is different depending on the type of operating system.

Accordingly, the system for initial setup of an energy storage system according to the second embodiment of the present invention presents a method for performing the initial setup by changing the static IP according to the operating system of the user terminal 200.

Specifically, the Controller 120 sets the static IP differently according to the operating system of the user terminal 200 by using the IP alias. Here, IP alias is a method of setting a plurality of IPs in one physical network interface card.

For example, the Controller 120 may set the static IP to 192.168.42.xx when the operating system of the user terminal 200 is Android, and may set the static IP to 172.20.10.xx when the operating system of the user terminal 200 is iOS.

The Controller 120 may selectively allocate different static IPs to different USB networks according to the operating system of the user terminal 200 connected to the energy management system 100.

For example, as shown in FIG. 3(a), when the user terminal 200 having an Android operating system is connected to the energy management system 100, the Controller 120 may allocate 192.168.42.xx to the USB network. And, as shown in FIG. 3(b), when the user terminal 200 having an iOS operating system is connected to the energy management system 100, the Controller 120 may allocate 172.20.10.xx to the USB network.

The user terminal 200 may access the setting server 110 with a static IP suitable for the operating system of the user terminal 200.

For example, as shown in FIG. 3(a), the user terminal 200 of which the operating system is Android may access the setting server 110 at 192.168.42.xx. And, as shown in FIG. 3(b), the user terminal 200 of which the operating system is iOS may access the setting server 110 at 172.20.10.xx.

The user terminal 200 accesses the setting server 110 of the energy management system 100 with a fixed IP suitable for the operating system. Specifically, the installer may access the setting server 110 by inputting a static IP known or designated by the user to the address bar of the web browser of the user terminal 200.

As such, the system for initial setup of an energy storage system according to the second embodiment of the present invention may perform initial setup by using the user terminal 200 having various operating systems.

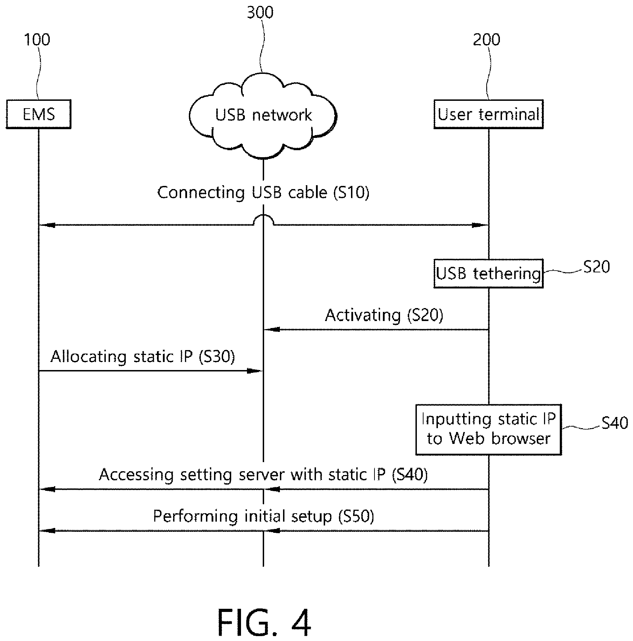

FIG. 4 is a flowchart of a method for initial setup of an energy storage system according to an exemplary embodiment of the present invention.

Hereinafter, a method for initial setup of an energy storage system according to an exemplary embodiment of the present invention will be described with reference to FIGS. 1 to 4.

First, the energy management system 100 and the user terminal 200 are connected with a USB cable at step S10, and the user terminal 200 activates the USB network 300 through USB tethering at step S20.

Next, the energy management system 100 allocates a preset static IP to the USB network 300 at step S30.

Next, the user terminal 200 accesses the setting server 110 of the energy management system 100 with a static IP at step S40.

Next, the user terminal 200 performs the initial setup of the energy storage system in the setting server 110 at step S50.

And, the step S50 of accessing the setting server 110 by the user terminal 200 may be a step of accessing the setting server 110 by inputting a static IP known or designated by the user to the address bar of the web browser 210 of the user terminal 200.

The method for initial setup of an energy storage system according to an exemplary embodiment of the present invention may include, before the step S50 of performing the initial setup by the user terminal 200, a step of providing, by the setting server, an interface for performing the initial setup to the user terminal 200.

The method for initial setup of an energy storage system according to an exemplary embodiment of the present invention may include a step of setting, by the energy management system 100, the static IP differently according to the operating system of the user terminal 200.

Here, the step S30 of allocating the static IP by the energy management system 100 may be a step of selectively allocating, by the energy management system 100, different static IPs to different USB networks 300.

And, the step S40 of accessing the setting server 110 by the user terminal 200 may be a step of accessing, by the user terminal 200, the setting server 210 with a static IP suitable for the operating system of the user terminal 200.

As such, in the method for initial setup of an energy storage system according to an exemplary embodiment of the present invention, there is no need to install a separate initial setup application in the user terminal 200 at the time of initial setup, as well as the hassle of manually matching the IP address range of the user terminal 200 with the IP address range of the energy management system 200 for initial setup can be eliminated.

In addition, the method for initial setup of an energy storage system according to an exemplary embodiment of the present invention may perform initial setup by using the user terminal 200 having various operating systems.

In the detailed description of the present invention, although specific embodiments have been described, it is apparent that various modifications are possible without departing from the scope of the present invention. Therefore, the scope of the present invention is not limited to the described embodiments, and should be defined by the following claims.

## Claims

1. A method for initial setup of an energy storage system suitable for an installation environment when installing the energy storage system, the method comprising:
connecting an energy management system (100) and a user terminal (200) with a USB cable;
activating, by the user terminal (200), a USB network through USB tethering for initial setup;
allocating, by the energy management system (100), a preset static IP to the USB network;
accessing, by the user terminal (200), a setting server (110) of the energy management system (100) using the static IP, wherein the accessing the setting server (110) is a step of accessing the setting server (110) by inputting the static IP to an address bar of a web browser of the user terminal (200); and
performing, by the user terminal (200), initial setup of the energy storage system in the setting server (110),
further comprising setting, by the energy management system (100), the static IP differently according to an operating system of the user terminal (200),
wherein the allocating the static IP is a step of selectively allocating, by the energy management system (100), the different static IPs to the different USB networks.

2. The method of claim 1, further comprising, before performing the initial setup, a step of providing, by the setting server (110), an interface for performing the initial setup to the user terminal (200).

3. The method of claim 1, wherein the accessing the setting server (100) is a step of accessing, by the user terminal (200), the setting server (110) with the static IP suitable for the operating system of the user terminal (200).

4. A system for initial setup of an energy storage system, comprising:
an energy management system (100) comprising a setting server (110) for performing initial setup suitable for an installation environment when installing the energy storage system, and a Controller (120) for allocating a preset static IP to a USB network for initial setup; and
a user terminal (200) connected to the energy management system through a USB cable and for activating the USB network through USB tethering;
wherein the user terminal (200) is configured to access the setting server (110) of the energy management system (100) with the static IP and is configured to initial setup of the energy storage system in the setting server, wherein, when the static IP is input to an address bar of a web browser of the user terminal (200), the user terminal (200) accesses the setting server (110),
wherein the Controller (120) is configured to set the static IP differently according to an operating system of the user terminal (200),
wherein the Controller (120) is configured to selectively allocate the different static IPs to different USB networks according to the operating system of the user terminal.

5. The system of claim 4, wherein the user terminal (200) accesses the setting server (110) with the static IP suitable for the operating system of the user terminal (200).

## Patentansprüche

1. Verfahren zur erstmaligen Einstellung eines Energiespeichersystems geeignet für eine Installationsumgebung, wenn das Energiespeichersystem installiert wird, wobei das Verfahren Folgendes umfasst:
Verbinden eines Energieverwaltungssystems (100) und eines Benutzerendgerätes (200) mit einem USB-Kabel;
Aktivieren, durch das Benutzerendgerät (200), eines USB-Netzwerks über USB-Tethering für erstmalige Einstellung;
Zuteilen, durch das Energieverwaltungssystem (100), einer voreingestellten statischen IP-Adresse an das USB-Netzwerk;
Zugreifen, durch das Benutzerendgerät (200), auf einen Einstellungsserver (110) des Energieverwaltungssystems (100) unter Benutzung der statischen IP-Adresse, wobei das Zugreifen auf den Einstellungsserver (110) ein Schritt des Zugreifens auf den Einstellungsserver (110) durch Eingeben der statischen IP-Adresse in ein Adressfeld eines Webbrowsers des Benutzerendgerätes (200) ist; und
Durchführen, durch das Benutzerendgerät (200), einer erstmaligen Einstellung des Energiespeichersystems im Einstellungsserver (110),
ferner umfassend Einstellen, durch das Energieverwaltungssystem (100), der statischen IP-Adresse unterschiedlich gemäß einem Betriebssystem des Benutzerendgerätes (200),
wobei das Zuteilen der statischen IP-Adresse ein Schritt des selektiven Zuteilens, durch das Energieverwaltungssystem (100), der verschiedenen statischen IP-Adressen an die verschiedenen USB-Netzwerke ist.

2. Verfahren nach Anspruch 1, ferner umfassend, vor dem Durchführen der erstmaligen Einstellung, einen Schritt des Bereitstellens, durch den Einstellungsserver (110), einer Benutzeroberfläche zum Durchführen der erstmaligen Einstellung an das Benutzerendgerät (200).

3. Verfahren nach Anspruch 1, wobei das Zugreifen auf den Einstellungsserver (100) ein Schritt des Zugreifens, durch das Benutzerendgerät (200), auf den Einstellungsserver (110) mit der für das Betriebssystem des Benutzerendgerätes (200) geeigneten statischen IP-Adresse ist.

4. System zur erstmaligen Einstellung eines Energiespeichersystems, umfassend:
ein Energieverwaltungssystem (100) umfassend einen Einstellungsserver (110) zum Durchführen der erstmaligen Einstellung für eine Installationsumgebung, wenn das Energiespeichersystem installiert wird, und eine Steuerung (120) zum Zuteilen einer voreingestellten statischen IP-Adresse an ein USB-Netzwerk für die erstmalige Einstellung; und
ein Benutzerendgerät (200) verbunden mit dem Energieverwaltungssystem über ein USB-Kabel und zum Aktivieren des USB-Netzwerks über USB-Tethering vorgesehen;
wobei das Benutzerendgerät (200) zum Zugreifen auf den Einstellungsserver (110) des Energieverwaltungssystems (100) mit der statischen IP-Adresse konfiguriert ist und zum erstmaligen Einstellen des Energiespeichersystems im Einstellungsserver konfiguriert ist, wobei, wenn die statische IP-Adresse in ein Adressfeld eines Webbrowsers des Benutzerendgerätes (200) eingegeben wird, das Benutzerendgerät (200) auf den Einstellungsserver (110) zugreift,
wobei die Steuerung (120) konfiguriert ist, die statische IP-Adresse unterschiedlich gemäß einem Betriebssystem des Benutzerendgerätes (200) einzustellen,
wobei die Steuerung (120) konfiguriert ist, selektiv die verschiedenen statischen IP-Adressen an die verschiedenen USB-Netzwerke gemäß dem Betriebssystem des Benutzerendgerätes zuzuteilen.

5. System nach Anspruch 4, wobei das Benutzerendgerät (200) auf den Einstellungsserver (110) mit der für das Betriebssystem des Benutzerendgerätes (200) geeigneten statischen IP-Adresse zugreift.

## Revendications

1. Procédé de configuration initiale d'un système de stockage d'énergie convenant à un environnement d'installation lors de l'installation du système de stockage d'énergie, le procédé comprenant les étapes consistant à :
connecter un système de gestion d'énergie (100) et un terminal d'utilisateur (200) à l'aide d'un câble USB ;
activer, par le terminal d'utilisateur (200), un réseau USB par l'intermédiaire d'une liaison USB pour la configuration initiale ;
attribuer, par le système de gestion d'énergie (100), une adresse IP statique prédéfinie au réseau USB ;
accéder, par le terminal d'utilisateur (200), à un serveur de configuration (110) du système de gestion d'énergie (100) au moyen de l'adresse IP statique, l'accès au serveur de configuration (110) étant une étape consistant à accéder au serveur de configuration (110) en saisissant l'adresse IP statique dans une barre d'adresse d'un navigateur Web du terminal d'utilisateur (200) ; et
réaliser, par le terminal d'utilisateur (200), la configuration initiale du système de stockage d'énergie dans le serveur de configuration (110),
le procédé comprenant en outre l'étape consistant à configurer, par le système de gestion d'énergie (100), l'adresse IP statique différemment selon un système d'exploitation du terminal d'utilisateur (200),
l'attribution de l'adresse IP statique étant une étape consistant à attribuer de manière sélective, par le système de gestion d'énergie (100), les différentes adresses IP statiques aux différents réseaux USB.

2. Procédé selon la revendication 1, comprenant en outre, avant la réalisation de la configuration initiale, une étape consistant à fournir, par le serveur de configuration (110) au terminal d'utilisateur (200), une interface permettant de réaliser la configuration initiale.

3. Procédé selon la revendication 1, dans lequel l'accès au serveur de configuration (100) est une étape consistant à accéder, par le terminal d'utilisateur (200), au serveur de configuration (110) à l'aide de l'adresse IP statique convenant au système d'exploitation du terminal d'utilisateur (200).

4. Système de configuration initiale d'un système de stockage d'énergie, comprenant :
un système de gestion d'énergie (100) comprenant un serveur de configuration (110) permettant de réaliser une configuration initiale convenant à un environnement d'installation lors de l'installation du système de stockage d'énergie, et un dispositif de commande (120) permettant d'attribuer une adresse IP statique prédéfinie à un réseau USB pour la configuration initiale ; et
un terminal d'utilisateur (200) connecté au système de gestion d'énergie par l'intermédiaire d'un câble USB et permettant d'activer le réseau USB par l'intermédiaire d'une liaison USB ;
le terminal d'utilisateur (200) étant configuré pour accéder au serveur de configuration (110) du système de gestion d'énergie (100) à l'aide de l'adresse IP statique et étant configuré pour la configuration initiale du système de stockage d'énergie dans le serveur de configuration, le terminal d'utilisateur (200) accédant au serveur de configuration (110) lorsque l'adresse IP statique est saisie dans une barre d'adresse d'un navigateur Web du terminal d'utilisateur (200),
le dispositif de commande (120) étant configuré pour configurer l'adresse IP statique différemment selon un système d'exploitation du terminal d'utilisateur (200),
le dispositif de commande (120) étant configuré pour attribuer de manière sélective les différentes adresses IP statiques à différents réseaux USB selon le système d'exploitation du terminal d'utilisateur.

5. Système selon la revendication 4, dans lequel le terminal d'utilisateur (200) accède au serveur de configuration (110) à l'aide de l'adresse IP statique convenant au système d'exploitation du terminal d'utilisateur (200).
